# EUROPEAN PATENT APPLICATION

(11) **EP 3 943 296 A1**
(43) Date of publication of application: **26.01.2022**
(21) Application number: 20773710.7
(22) Date of filing: 09.03.2020
(51) Int. Cl.: B32B 27/20, G02B 1/11, G02B 1/14, G09F 9/00, G06F 3/041

(54) **SMOKED HARD COAT FILM, AND DISPLAY DEVICE IN WHICH SAME IS USED**

(30) Priority: 18.03.2019 JP 2019050295
(71) Applicant: Kimoto Co., Ltd., Saitama 338-0013 (JP)
(72) Inventor: TACHIBANA, Kazutoshi, Saitama-shi, Saitama 338-0013 (JP); SUZUKI, Sho, Saitama-shi, Saitama 338-0013 (JP); KATO, Tatsuya, Saitama-shi, Saitama 338-0013 (JP)
(74) Representative: Strehl Schübel-Hopf & Partner
(86) International application number: PCT/JP2020/009899
(87) International publication number: WO 2020/189355

(57) **Abstract**

To provide a hard coating film and a display device which are enhanced in feeling of uniformity of designability between a display area of a display and an area therearound and which are according to a new design concept. A smoke hard coating film 100 including at least a hard coating layer 21 containing a curing resin and a colorant dispersed in the curing resin, and a print layer 41 for partition and formation of a frame area FA and a display area DA disposed in the frame area FA in planar view, and having a total light transmittance (according to JIS K7361-1) of the display area DA, of 0.5% or more and less than 75%, is used in a display device 200 provided with a light-emitting display D. A difference (|R_{DA} - R_{FA}|) between a reflectance of the display area DA (R_{DA}) at 550 nm in a SCI mode and a reflectance of the frame area FA (R_{FA}) at 550 nm in the SCI mode in turn off of the display is 5% or less in a state where the smoke hard coating film 100 is provided on the display surface.

## Description

### [Technical Field]

The present invention particularly relates to a hard coating film excellent in designability, and a display device and the like each using the hard coating film.

### [Background Art]

An image display device including a light-emitting display such as a cathode-ray tube (CRT), a plasma display (PDP), a liquid crystal display (LCD), or an electroluminescence display (OELD or IELD) is used in a wide range of fields. In recent years, such an image display device has also been widely used as an input device where, for example, a resistance film type or electrostatic capacity type touch panel is provided on an image display unit (display) of a display device. In the case of use as such an input device, a hard coating film is generally used for the purpose of scratch resistance, wear resistance, and the like.

A hard coating film for use in such an application has been conventionally demanded to not only have sufficient hardness, but also be sufficient high in transparency in terms of the usage mode. That is, such a film is demanded to have a transparency (optical characteristics) comparable with a whole light transmittance (or visible light transmittance) of 90% or more, in addition to scratch resistance and wear resistance. In recent years, there have been increasingly demanded not only antibacterial properties, chemical resistance, antifouling properties, and the like, but also, for example, antireflection properties and antiglare properties in order to suppress reflection and/or glaring of external light in use under a fluorescent lamp or solar light (see Patent Literatures 1 to 5).

On the other hand, a hard coating film which not only allows any pattern of a conductive pattern layer of a transparent conductive film or the like to be invisible, but also suppresses the occurrence of glaring is proposed as a technique for improving presentation of an electrostatic capacity type touch panel (see Patent Literature 6).

### [Citation List]

### [Patent Literature]

[Patent Literature 1] Japanese Patent Laid-Open No. 2013-203935
[Patent Literature 2] Japanese Patent Laid-Open No. 2015-017243
[Patent Literature 3] Japanese Patent Laid-Open No. 2017-159506
[Patent Literature 4] Japanese Patent Laid-Open No. 2017-179099
[Patent Literature 5] Japanese Patent Laid-Open No. 2018-055056
[Patent Literature 6] Japanese Patent Laid-Open No. 2015-184638

### [Summary of Invention]

### [Technical Problem]

While a display device is generally used where a display area of the above-mentioned light-emitting display is disposed in a frame in planar view, a black frame having a piano black tone tends to become popular for the reason of, for example, an increase in immersion feeling in an image or moving image displayed on a display. Such a tendency is remarkably recognized in in-vehicle use, theater room use, and/or the like where a black-based interior material is frequently used, also from the viewpoint of feeling of uniformity of designability together with black-based interior material and exterior material around a light-emitting display. In fact, in such each use, black-based interior material and exterior material each having a piano black tone, a black metal tone, or the like are frequently used for, for example, an interior panel and a dashboard around a housing, to which a light-emitting display is attached.

However, it has been found by findings of the present inventors that, in a case where the conventional hard coating film is attached to a light-emitting display, a display area of the display and, for example, a frame area therearound are largely different in color tone and texture, in particular, in turn off of the display, and designability is not sufficiently enhanced. In other words, no designability having feeling of uniformity in turn off of the display has been able to be realized in the prior art, and it has been found that a hard coating film with a new design concept is demanded in, for example, higher-end in-vehicle use and theater room use, from the above viewpoint.

The present invention has been made in view of the above problems. In other words, an object of the present invention is to provide, for example, a hard coating film with a new design concept, which can allow for an enhancement in feeling of uniformity of designability between a display area of a display and, for example, a frame area therearound, in turn off of the display.

### [Solution to Problem]

The present inventors have made intensive studies about optical characteristics and the like of a display area of a display and, for example, a frame area therearound in order to solve the above problems, and as a result, have found that the above problems can be solved by newly designing and using a predetermined smoke hard coating film including at least a hard coating layer containing at least a curing resin and a colorant dispersed in the curing resin, and a print layer for partition and formation of a frame area and a display area placed in the frame area in planar view, in which the smoke hard coating film in the display area has a total light transmittance Tt (according to JIS K7361-1) of 0.5% or more and less than 75%, leading to completion of the present invention.

That is, the present invention provides various specific aspects represented below.
[1] A display device provided with a smoke hard coating film, comprising at least: a display device comprising a light-emitting display; and a smoke hard coating film provided on a display of the display device, wherein
   the smoke hard coating film comprises at least: a hard coating layer comprising at least a curing resin and a colorant dispersed in the curing resin; and a print layer for partition and formation of a frame area and a display area placed in the frame area in planar view, and the smoke hard coating film in the display area has a total light transmittance (according to JIS K7361-1) of 0.5% or more and less than 75%, and
   a difference (|R_{DA} - R_{FA}|) between a reflectance of the display area (R_{DA}) at 550 nm in a SCI mode and a reflectance of the frame area around the display (R_{FA}) at 550 nm in the SCI mode in turn off of the display is 5% or less in a state where the smoke hard coating film is provided on the display surface.
[2] The display device provided with a smoke hard coating film according to [1], wherein the reflectance of the display area (R_{DA}) at 550 nm in the SCI mode in turn off of the display is within 6% in a state where the smoke hard coating film is provided on the display surface.
[3] A smoke hard coating film to be provided on a display of a display device comprising a light-emitting display, the smoke hard coating film comprising at least:
   a hard coating layer comprising at least a curing resin and a colorant dispersed in the curing resin; and a print layer for partition and formation of a frame area and a display area placed in the frame area in planar view, wherein
   the display area has a total light transmittance (according to JIS K7361-1) of 0.5% or more and less than 75%, and
   a difference (|R_{DA} - R_{FA}|) between a reflectance of the display area (R_{DA}) at 550 nm in a SCI mode and a reflectance of the frame area around the display (R_{FA}) at 550 nm in the SCI mode in turn off of the display is 5% or less in a state where the smoke hard coating film is provided on the display surface.
[4] The smoke hard coating film according to [3], wherein the reflectance of the display area (R_{DA}) at 550 nm in turn off of the display is within 6% in a state where the smoke hard coating film is provided on the display surface.
[5] The smoke hard coating film according to [3] or [4], wherein respective differences (|X_{DA} value - X_{FA} value|, |Y_{DA} value - Y_{FA} value|, and |Z_{DA} value - Z_{FA} value|) between a reflectance X_{DA} value, a reflectance Y_{DA} value, and a reflectance Z_{DA} value of the display area (by use of a CIE standard illuminant D₆₅, according to JIS Z 8720: 2012) in an XYZ color system in a SCI mode and a reflectance X_{FA} value, a reflectance Y_{FA} value, and a reflectance Z_{FA} value of the frame area around the display in the XYZ color system in the SCI mode in turn off of the display are each within 5 in a state where the smoke hard coating film is provided on the display surface.
[6] The smoke hard coating film according to any one of [3] to [5], wherein a reflectance X_{DA} value, a reflectance Y_{DA} value, and a reflectance Z_{DA} value of the display area (by use of a CIE standard illuminant D₆₅, according to JIS Z 8720: 2012) in an XYZ color system in the SCI mode in turn off of the display are each 6 or less in a state where the smoke hard coating film is provided on the display surface.
[7] The smoke hard coating film according to any one of [3] to [6], wherein the colorant comprises carbon black having an average particle size D₅₀ of 0.01 to 2.0 µm.
[8] The smoke hard coating film according to any one of [3] to [7], wherein a content rate of the colorant is 1 to 15 parts by mass in terms of solid content based on 100 parts by mass of the entire resin component.
[9] The smoke hard coating film according to any one of [3] to [8], wherein the hard coating layer further comprises a matting agent.
[10] The smoke hard coating film according to [9], wherein a content rate of the matting agent is 1 to 15 parts by mass in terms of solid content based on 100 parts by mass of the entire resin component.
[11] The smoke hard coating film according to any one of [3] to [10], wherein the smoke hard coating film is a shaped article obtained by shaping at least the hard coating layer and the print layer on a substrate film.
[12] The smoke hard coating film according to any one of [3] to [11], wherein the smoke hard coating film is a laminated molded product comprising a laminated structure including at least the hard coating layer, a substrate film, and the print layer in the listed order.
[13] The smoke hard coating film according to any one of [3] to [11], wherein the smoke hard coating film is a laminated molded product comprising a laminated structure including at least an antireflection layer, the hard coating layer, a substrate film, and the print layer in the listed order.
[14] An integrated smoke hard coating film shaped article which comprises a laminated structure including at least a hard coating layer, a substrate film, a print layer and a resin layer for molding in the listed order and which is to be provided on a display of a display device comprising a light-emitting display, wherein
   the hard coating layer comprises at least a curing resin and a colorant dispersed in the curing resin,
   the print layer partitions and forms a frame area and a display area placed in the frame area in planar view,
   the integrated smoke hard coating film shaped article in the display area has a total light transmittance (according to JIS K7361-1) of 0.5% or more and less than 75%, and
   a difference (|R_{DA} - R_{FA}|) between a reflectance of the display area (R_{DA}) at 550 nm in a SCI mode and a reflectance of the frame area around the display (R_{FA}) at 550 nm in the SCI mode in turn off of the display is 5% or less in a state where the integrated smoke hard coating film shaped article is provided on the display surface.

### [Advantageous Effects of Invention]

According to the present invention, there can be provided a smoke hard coating film with a new design concept, which can allow for an enhancement in feeling of uniformity of designability between a display area of a display and, for example, a frame area therearound, in turn off of the display, as well as a display device and the like each using the smoke hard coating film. Such a smoke hard coating film or the like can be used to thereby allow high designability demanded in, for example, higher-end in-vehicle use and theater room use to be realized.

### [Brief Description of Drawings]

[Figure 1] A schematic plan view illustrating a smoke hard coating film 100 of one embodiment, provided on a display side of a light-emitting display, and an image display device 300.
[Figure 2] A cross-sectional view of II-II of Figure 1.
[Figure 3] A schematic cross-sectional view illustrating a smoke hard coating film 100 of one embodiment.
[Figure 4] A schematic cross-sectional view illustrating an integrated smoke hard coating film shaped article 101 of one embodiment.
[Figure 5] Data actually measured of each example of a smoke hard coating film 100 and an image display device 300.

### [Description of Embodiments]

Hereinafter, embodiments of the present invention will be described in detail with reference to the drawings. It is noted that a positional relationship among the left, right, top and bottom is based on a positional relationship illustrated in the drawings, unless particularly noted. A dimensional ratio in the drawings is not limited by a ratio illustrated. Herein, the following embodiments are illustrative for describing the present invention and the present invention is not limited thereto. The designation of any numerical value range, for example, "1 to 100", herein includes both the upper limit value "100" and the lower limit value "1". The same applies to the designations of other numerical value ranges.

### (First embodiment)

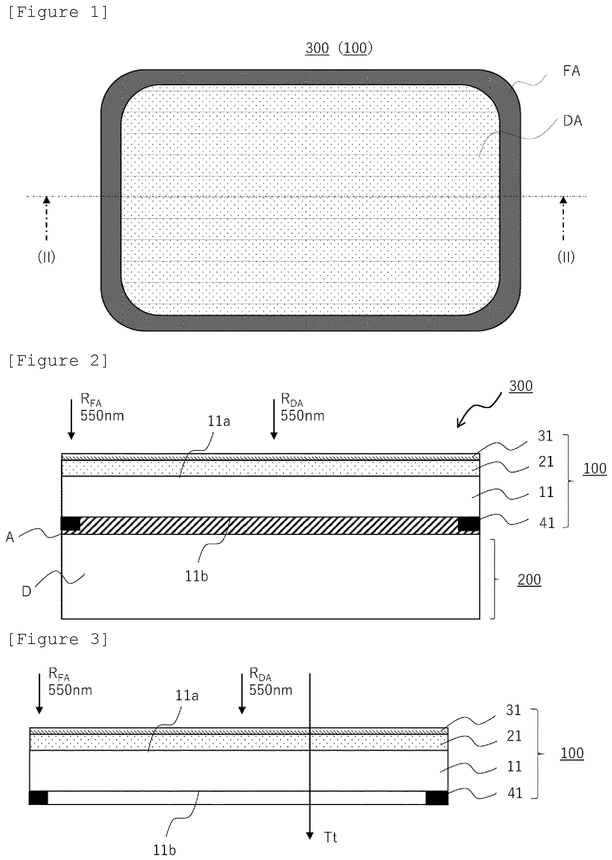

Figure 1 and Figure 2 are respectively a plan view and a cross-sectional view, illustrating schematic configurations of a smoke hard coating film 100 of a first embodiment of the present invention and an image display device 300 using the smoke hard coating film. The smoke hard coating film 100 of the present embodiment includes at least a substrate film 11, a hard coating layer 21 provided on one surface 11a of the substrate film 11, and a print layer 41 provided on other surface 11b of the substrate film 11. As illustrated in Figure 2, the smoke hard coating film 100 is provided on a display D of a display device 200 including a light-emitting display.

The smoke hard coating film 100 of the present embodiment has a laminated structure (three-layered structure) where the hard coating layer 21, the substrate film 11, and the print layer 41 are at least arranged in the listed order. In the laminated structure, the hard coating layer 21 is disposed on the outermost surface on the front of the smoke hard coating film 100, and is disposed in the state of being exposed on the outermost surface of the smoke hard coating film 100. A surface of the hard coating layer 21 may be, if necessary, subjected to any optional surface treatment(s) such as an antistatic treatment, an antifouling treatment, an antibacterial treatment, and/or an antireflection treatment. Any optional layer(s) such as an antistatic layer, a protection layer, an antifouling layer, an antibacterial layer, an antireflection film, and/or a print layer may be, if necessary, provided on the surface of the hard coating layer 21. In the present embodiment, an antireflection layer 31 is provided on the surface of the hard coating layer 21. On the other hand, a print layer 41 serving as a decorative layer is provided on the rear (other surface 11b of the substrate film 11) of the smoke hard coating film 100. Any optional layer(s) such as a protection layer, an antifouling layer, and/or a primer layer may be, if necessary, provided on the surface of the print layer 41. The smoke hard coating film 100 preferably has a laminated structure where the hard coating layer 21, the substrate film 11, and the print layer 41 are at least arranged in the listed order.

The phrase "provided on one (other) surface of ... " is herein meant to encompass not only an aspect where the hard coating layer 21 and the print layer 41 are respectively disposed directly on surfaces (for example, surface 11a and surface 11b) of substrate film 11, as in the present embodiment, but also an aspect where any optional layer(s) not illustrated (for example, a primer layer and/or an adhesive layer) are/is interposed between the surface 11a of the substrate film 11 and the hard coating layer 21 and/or between the surface 11b of the substrate film 11 and the print layer 41 to thereby allow the hard coating layer 21 and the print layer 41 to be disposed away from the substrate film 11. The laminated structure including at least the hard coating layer 21 and the print layer 41 is meant to encompass not only a structure where only the hard coating layer 21 and the print layer 41 are directly laminated on the substrate film 11, but also such a structure where optional layer(s) described above are/is further provided among the layers of the three-layered structure.

The substrate film 11 supports the hard coating layer 21 and the print layer 41. The material of the substrate film 11 is not particularly limited in terms of the type thereof as long as the substrate film can support the hard coating layer 21 and the print layer 41. A synthetic resin film is preferably used from the viewpoint of, for example, dimension stability, mechanical strength, and weight saving. Specific examples of the synthetic resin film include a polyester film, an ABS (acrylonitrile-butadiene-styrene) film, a polyimide film, a polyamide film, a polyamide imide film, a polystyrene film, and a polycarbonate film. A (meth)acrylic film, a nylon-based film, a polyolefin-based film such as a polyethylene or polypropylene film, or a cellulose-based, polysulfone-based, polyphenylenesulfide-based, polyethersulfone-based, or polyether ether ketone-based film can also be used. Such a film can be used singly or in any combinations of two or more kinds thereof. A laminated film as any combination thereof can also be suitably used. The concept "(meth)acrylic" herein encompasses both acrylic and methacrylic. In particular, the substrate film 11 here used is suitably any of a polyester film, a polyimide film, a polycarbonate film, a (meth)acrylic film, and a laminated film as any combination thereof.

The appearance of the substrate film 11 may be any of transparent, semi-transparent, colorless, and colored, is not particularly limited, and is preferably one high in translucency. Specifically, the film is preferably a transparent resin film having a total light transmittance of 80% or more, more preferably 85% or more, further preferably 90% or more, particularly preferably 92% or more, as measured according to JIS K 7361-1.

The thickness of the substrate film 11 can be appropriately set depending on required performance and application, and is not particularly limited. The thickness of the substrate film 11 is preferably 50 µm or more, more preferably 80 µm or more, further preferably 100 µm or more from the viewpoint of weight saving and film thinning, and the upper limit is preferably 2 mm or less, more preferably 1 mm or less, further preferably 500 µm or less. The surfaces of the substrate film 11 can also be, if necessary, subjected to any of various known surface treatments such as an anchor treatment and a corona treatment, from the viewpoint of an enhancement in adhesiveness to the hard coating layer 21 and the print layer 41.

The hard coating layer 21 is a film provided from the viewpoint of, for example, an increase in surface hardness of the substrate film 11, enhancements in scratch resistance and wear resistance, and an increase in surface smoothness of the substrate film 11. The hard coating layer 21 of the present embodiment, here used, is a hard coating film containing at least a curing resin and a colorant dispersed in the curing resin in order to allow the above-mentioned designability to be provided. While one is exemplified in the present embodiment, where the hard coating layer 21 is provided on only one surface 11a of the substrate film 11, the hard coating layer may also be provided on each of both one surface 11a and other surface 11b of the substrate film 11.

Any known material can be used as the material constituting the hard coating layer 21, and the type thereof is not particularly limited. The material can be generally constituted from a cured product obtained by, for example, curing a resin composition containing at least a known resin such as a thermoplastic resin, a thermosetting resin, or an ionizing radiation-curable resin, and a colorant.

Examples of the thermoplastic resin and the thermosetting resin include saturated or unsaturated polyester-based resin, acrylic resin, acrylic urethane-based resin, polyester acrylate-based resin, polyurethane acrylate-based resin, epoxy acrylate-based resin, urethane-based resin, epoxy-based resin, vinyl resin, polycarbonate-based resin, cellulose-based resin, acetal-based resin, polyethylene-based resin, polystyrene-based resin, polyamide-based resin, polyimide-based resin, melamine-based resin, phenol-based resin, and silicone-based resin, but not particularly limited thereto. Such a resin can be used singly or in combinations of two or more kinds thereof.

The ionizing radiation-curable resin here used can be a photopolymerizable prepolymer which is to be cured by irradiation with ionizing radiation (ultraviolet light or electron beam). The photopolymerizable prepolymer, while can be used singly, is preferably used in combination with a photopolymerizable monomer and furthermore may be, if necessary, used together with auxiliary agent(s) such as a photopolymerization initiator, a photopolymerization promoter, and/or a sensitizer (for example, ultraviolet sensitizer), from the viewpoint of imparting or enhancing various performances, for example, an enhancement in crosslinking curability and adjustment of curing shrinkage.

A common photopolymerizable prepolymer is roughly classified to a cationic polymerization type and a radical polymerization type. Examples of the cationic polymerization type photopolymerizable prepolymer include an epoxy-based resin and a vinyl ether-based resin. Examples of the epoxy-based resin include a bisphenol-based epoxy resin, a novolac type epoxy resin, an alicyclic epoxy resin, and an aliphatic epoxy resin. Examples of the radical polymerization type photopolymerizable prepolymer include an acrylic prepolymer (hard prepolymer). Such a photopolymerizable prepolymer can be used singly or in combinations of two or more kinds thereof. In particular, an acrylic prepolymer (hard prepolymer) having two or more acryloyl groups in one molecule, which is to be crosslinked and cured to thereby have a three-dimensional network structure, is preferable from the viewpoint of hard coating ability.

Examples of the acrylic prepolymer include urethane acrylate, polyester acrylate, epoxy acrylate, melamine acrylate, polyfluoroalkyl acrylate, and silicone acrylate, but not particularly limited thereto. Such an acrylic prepolymer can be used singly or in combinations of two or more kinds thereof.

Examples of the urethane acrylate-based prepolymer include one obtained by esterifying a polyurethane oligomer obtained by a reaction of a polyether polyol or a polyester polyol with a polyisocyanate, according to a reaction with (meth)acrylic acid, but not particularly limited thereto. Such a urethane acrylate-based prepolymer can be used singly or in combinations of two or more kinds thereof.

Examples of the polyester acrylate-based prepolymer include one obtained by esterifying a hydroxyl group of a polyester oligomer having a hydroxyl group at each of both terminals, obtained by condensation of a polyvalent carboxylic acid and a polyhydric alcohol, with a (meth)acrylic acid, and one obtained by esterifying a hydroxyl group at a terminal of an oligomer obtained by addition of an alkylene oxide to a polyvalent carboxylic acid, with a (meth)acrylic acid, but not particularly limited thereto. Such a polyester acrylate-based prepolymer can be used singly or in combinations of two or more kinds thereof.

Examples of the epoxy acrylate-based prepolymer include one obtained by esterification due to a reaction of an oxirane ring of a bisphenol type epoxy resin or a novolac epoxy resin having a relatively low molecular weight, with a (meth)acrylic acid, but not particularly limited thereto. Such an epoxy acrylate-based prepolymer can be used singly or in combinations of two or more kinds thereof.

Examples of the photopolymerizable monomer include a monofunctional acrylic monomer (for example, 2-ethylhexyl acrylate, 2-hydroxyethyl acrylate, 2-hydroxypropyl acrylate, and butoxyethyl acrylate), a bifunctional acrylic monomer (for example, 1,6-hexanediol diacrylate, neopentyl glycol diacrylate, diethylene glycol diacrylate, polyethylene glycol diacrylate, and hydroxypivalic acid ester neopentyl glycol diacrylate), and a tri- or higher functional acrylic monomer (for example, dipentaerythritol hexaacrylate, trimethylpropane triacrylate, and pentaerythritol triacrylate), but not particularly limited thereto. Such a photopolymerizable monomer can be used singly or in combinations of two or more kinds thereof. The concept "(meth)acrylate" herein encompasses both acrylate and methacrylate.

Examples of the photopolymerization initiator, which is for use in the radical polymerization type photopolymerizable prepolymer and the photopolymerizable monomer, include acetophenone, benzophenone, Michler's ketone, benzoin, benzyl methyl ketal, benzoyl benzoate, hydroxycyclohexyl phenyl ketone, 2-methyl-1-(4-(methylthio)phenyl)-2-(4-morpholinyl)-1-propane, α-acyloxime ester, and a thioxanthone compound, but not particularly limited thereto. Examples of the photopolymerization initiator for the cationic polymerization type photopolymerizable prepolymer include a compound including an onium such as an aromatic sulfonium ion, an aromatic oxosulfonium ion, or an aromatic iodonium ion, and an anion of tetrafluoroborate, hexafluorophosphate, hexafluoroantimonate, hexafluoroarsenate or the like, but not particularly limited thereto. Such an initiator can be used singly or in combinations of two or more kinds thereof.

Examples of the photopolymerization promoter include p-dimethylaminobonzoic acid isoamyl ester and p-dimethylaminobonzoic acid ethyl ester. Examples of the ultraviolet sensitizer include n-butylamine, triethylamine, and tri-n-butyl phosphine, but not particularly limited thereto. Such promotor and sensitizer can be each used singly or in combinations of two or more kinds thereof.

The amount of such auxiliary agent(s) compounded is not particularly limited, and may be appropriately set usually in the range from 0.2 to 10 parts by mass based on 100 parts by mass in total of the above-mentioned photopolymerizable prepolymer and photopolymerizable monomer.

Alternatively, the hard coating layer 21 here used can also be a cured film of an ionizing radiation-curable organic/inorganic hybrid hard coating agent (hereinafter, also simply referred to as "hybrid hard coating agent".). The hybrid hard coating agent is not particularly limited, and examples thereof include one including a reactive silica particle (hereinafter, also simply referred to as "reactive silica particle".) having a surface into which at least a photosensitive group having photopolymerization reactivity is introduced. Examples of the photosensitive group having photopolymerization reactivity can include a polymerizable unsaturated group typified by a (meth)acryloyloxy group. The hybrid hard coating agent may also be one including a photopolymerization reactive compound with the photosensitive group having photopolymerization reactivity, introduced into the surface of the reactive silica particle, for example, an unsaturated organic compound having a polymerizable unsaturated group. Such a hybrid hard coating agent can be used in the form of a liquid mixture in which the reactive silica particle or the unsaturated organic compound having a polymerizable unsaturated group is mixed with or dissolved in a known solvent.

The average particle size of the reactive silica particle is not particularly limited, and is preferably 0.001 to 0.1 µm, more preferably 0.001 to 0.01 µm. Such a reactive silica particle here used can be, for example, one where a compound having a hydrolyzable silyl group, a polymerizable unsaturated group, and groups represented by the following general formulae (1) and (2) in its molecule (hereinafter, also referred to as "polymerizable unsaturated group-modified hydrolyzable silane".) is chemically bound to powdery silica or colloidal silica serving as a base material, via a silyloxy group. In other words, the polymerizable unsaturated group-modified hydrolyzable silane, whose hydrolyzable silyl group is subjected to a hydrolysis reaction and thus is taken with a silica particle to generate a silyloxy group by chemical binding, can be used for the reactive silica particle. Examples of the hydrolyzable silyl group include an alkoxysilyl group, a carboxysililate silyl group such as an acetoxysilyl group, a halogenated silyl group such as a chlorosilyl group, an aminosilyl group, an oximsilyl group, and a hydridesilyl group, but not particularly limited thereto. Examples of the polymerizable unsaturated group include an acryloyloxy group, a methacryloyloxy group, a vinyl group, a propenyl group, a butadienyl group, a styryl group, an ethynyl group, a cinnamoyl group, a malate group, and an acrylamide group, but not particularly limited thereto. 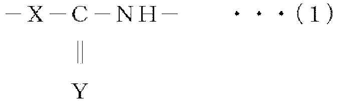 wherein X represents -NH-, an oxygen atom, or a sulfur atom and Y represents an oxygen atom or a sulfur atom, provided that, when X is an oxygen atom, Y is a sulfur atom.

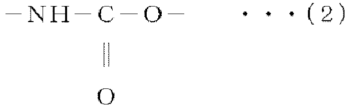

Examples of the unsaturated organic compound having a polymerizable unsaturated group can include a polyvalent unsaturated organic compound having two or more polymerizable unsaturated groups in its molecule, or a monovalent unsaturated organic compound having one polymerizable unsaturated group in its molecule.

Examples of the polyvalent unsaturated organic compound include ethylene glycol di(meth)acrylate, diethylene glycol di(meth)acrylate, glycerol di(meth)acrylate, glycerol tri(meth)acrylate, 1,4-butanediol di(meth)acrylate, 1,6-hexanediol di(meth)acrylate, neopentyl glycol di(meth)acrylate, trimethylolpropane tri(meth)acrylate, dicyclopentanyl di(meth)acrylate, pentaerythritol tri(meth)acrylate, pentaerythritol tetra(meth)acrylate, dipentaerythritol hexa(meth)acrylate, dipentaerythritol monohydroxy penta(meth)acrylate, ditrimethylolpropane tetra(meth)acrylate, diethylene glycol di(meth)acrylate, polyethylene glycol di(meth)acrylate, tripropylene glycol di(meth)acrylate, and polypropylene glycol di(meth)acrylate.

Examples of the monovalent unsaturated organic compound include methyl (meth)acrylate, ethyl (meth)acrylate, propyl (meth)acrylate, butyl (meth)acrylate, 2-ethylhexyl (meth)acrylate, isodecyl (meth)acrylate, lauryl (meth)acrylate, stearyl (meth)acrylate, allyl (meth)acrylate, cyclohexyl (meth)acrylate, methyl cyclohexyl (meth)acrylate, isobornyl (meth)acrylate, 2-hydroxyethyl (meth)acrylate, 2-hydroxypropyl (meth)acrylate, glycerol(meth)acrylate, glycidyl (meth)acrylate, benzyl (meth)acrylate, 2-ethoxyethyl (meth)acrylate, 2-(2-ethoxyethoxy)ethyl (meth)acrylate, butoxyethyl (meth)acrylate, 2-methoxyethyl (meth)acrylate, methoxydiethylene glycol (meth)acrylate, methoxytriethylene glycol (meth)acrylate, methoxypolyethylene glycol (meth)acrylate, 2-methoxypropyl (meth)acrylate, methoxydipropylene glycol (meth)acrylate, methoxytripropylene glycol (meth)acrylate, methoxypolypropylene glycol (meth)acrylate, polyethylene glycol (meth)acrylate, and polypropylene glycol (meth)acrylate.

The cured film of the hybrid hard coating agent can contain, in addition to the reactive silica particle and the photopolymerization reactive compound, for example, the above-mentioned auxiliary agent(s), such as the photopolymerization initiator, the photopolymerization promoter, and/or the sensitizer (for example, ultraviolet sensitizer), and/or, for example, the thermoplastic resin, the thermosetting resin, and/or the ionizing radiation-curable resin. Such preferable materials and the amounts thereof compounded are as described above, and the description thereof overlapped is here omitted.

A colorant is dispersed in the curing resin of the hard coating layer 21. The colorant is for adjustment of the total light transmittance Tt (according to JIS K7361-1) of the display area DA in the smoke hard coating film 100, within a predetermined range. The colorant here used can be appropriately selected from known colorants depending on desired performance, and the type thereof is not particularly limited. Such a colorant can be used singly or in any combinations of two or more kinds thereof.

The colorant here used is preferably a black particle from the viewpoint that the total light transmittance and the reflectance at 550 nm are easily adjusted and each color of the hard coating layer 21 and the smoke hard coating film 100 can be adjusted to a staid dark color having high-class feeling (black color). Examples of the black particle include magnetite-based black, copper/iron/manganese-based black, titanium black, carbon black, and aniline black, but not particularly limited thereto. In particular, a black resin particle, titanium black, carbon black, and aniline black are preferable, carbon black and aniline black are more preferable. The carbon black here is one produced by any of various known production methods, such as oil furnace black, lamp black, channel black, gas furnace black, acetylene black, thermal black, or Ketjen black, but the type thereof is not particularly limited. Conductive carbon black is particularly preferably used from the viewpoint that conductivity is imparted or charging due to static electricity is prevented. Carbon black has a long history, simple carbon black substances and carbon black dispersions of various grades are commercially available from, for example, Mitsubishi Chemical Corporation, Asahi Carbon Co., Ltd., Mikuni Color Ltd., Resino Color Industry Co., Ltd., Cabot Corporation, and Degussa AG, and the carbon black here used may be appropriately selected therefrom depending on required performance and application.

The particle size of the colorant may be appropriately set depending on required performance and the like from the viewpoint of the total light transmittance, the reflectance at 550 nm, dispersibility, film-forming properties, handleability, and the like, and is not particularly limited, and the average particle size D₅₀ is preferably 0.01 to 2.0 µm, more preferably 0.05 to 1.0 µm, further preferably 0.08 to 0.5 µm. For example, a carbon black colorant having an average particle size D₅₀ of 0.01 to 2.0 µm is preferably used. Use of a colorant large in particle size tends to result in a lower total light transmittance, and use of a colorant small in particle size tends to result in a higher total light transmittance. The average particle size D₅₀ herein means a median size (D₅₀) on a volume basis, measured with a laser diffraction type particle size distribution measurement apparatus (for example, Shimadzu Corporation: SALD-7000).

The content (total amount) of the colorant may also be again appropriately set depending on required performance and the like from the viewpoint of the total light transmittance, the reflectance at 550 nm, dispersibility, film-forming properties, handleability, and the like, is not particularly limited, and is preferably 1 to 15 parts by mass, more preferably 1.5 to 14 parts by mass, further preferably 2 to 10 parts by mass in terms of solid content based on 100 parts by mass of the entire resin component included in the hard coating layer 21, from the viewpoint of the compounding balance between other essential components and optional components described above. A large amount of the colorant used tends to result in a lower total light transmittance.

The hard coating layer 21 may contain, in addition to the above-mentioned curing resin and colorant, a matting agent, for example, a silica compound such as porous silica, alumina, talc, clay, calcium carbonate, magnesium carbonate, barium sulfate, aluminum hydroxide, titanium dioxide, or zirconium oxide, from the viewpoint of an enhancement in antiglare properties. The matting agent can be compounded to thereby adjust the reflectance at 550 nm and also adjust the color tones (textures) of the hard coating layer 21 and the smoke hard coating film 100 from a dark color to a transparent color (clear color). The particle size of the matting agent may be appropriately set depending on required performance and the like from the viewpoint of the total light transmittance, the reflectance at 550 nm, dispersibility, film-forming properties, handleability, and the like, and is not particularly limited, and the average particle size D₅₀ is preferably 1 to 20 µm, more preferably 1 to 15 µm, further preferably 2 to 10 µm. The matting agent, whose average particle size D₅₀ is a small particle size in the nanometer order, may be included. The amount of the matting agent compounded can be, if necessary, appropriately adjusted, is not particularly limited, and is preferably 1 to 15 parts by mass, more preferably 1 to 13 parts by mass, further preferably 1 to 10 parts by mass in terms of solid content based on 100 parts by mass of the entire resin component included in the hard coating layer 21.

The hard coating layer 21 may contain various additives as long as the effects of the present invention are not excessively impaired. Examples of such various additives include a surface conditioner, a lubricant, a fluorescent whitener, a flame retardant, an antibacterial agent, a mildew-proofing agent, an ultraviolet absorber, a light stabilizer, a thermal stabilizer, an antioxidant, a plasticizer, a leveling agent, a fluidity controlling agent, a defoaming agent, a dispersant, a storage stabilizer, a crosslinking agent, and a silane coupling agent, but not particularly limited thereto. Examples of the lubricant include hydrocarbon-based lubricants such as polyethylene, paraffin, and wax; fatty acid-based lubricants such as stearic acid and 12-hydroxystearic acid; amide-based lubricants such as stearic acid amide, oleic acid amide, and erucic acid amide; ester-based lubricants such as butyl stearate and monoglyceride stearate; alcohol-based lubricants; solid lubricants such as metal soap, talc, and molybdenum disulfide; particles of silicone resins; and particles of fluororesins such as polytetrafluoroethylene wax and polyvinylidene fluoride, but not particularly limited thereto. In particular, an organic lubricant is particularly preferably used. In a case where an ultraviolet curing type resin or an electron beam curing type resin is used as a binder resin, for example, a sensitizer such as n-butylamine, triethylamine, or tri-n-butyl phosphine, and/or an ultraviolet absorber may also be used. The content rate thereof is not particularly limited, and is preferably generally 0.01 to 5% by mass in terms of solid content relative to the entire resin component included in the hard coating layer 21.

The thickness of the hard coating layer 21 can be appropriately set depending on desired performance, is not particularly limited, and is preferably 0.1 to 20 µm, more preferably 0.5 to 15 µm, further preferably 2 to 12 µm. The translucency of the hard coating layer 21 by itself is preferably adjusted so that the total light transmittance Tt (according to JIS K7361-1) of the display area DA in perpendicular incidence in the thickness direction, namely, at an incident angle of 0° is 0.5% or more and less than 75%, from the viewpoint that the total light transmittance of the smoke hard coating film 100 is realized.

The surface hardness of the hard coating layer 21 can also be appropriately set depending on desired performance, is not particularly limited, and is preferably HB or more, more preferably F or more, further preferably H or more. The value of the surface hardness of the hard coating layer 21 is herein a value represented as a pencil scratching value (pencil hardness) measured by a method according to JIS-K5600 (1999).

Any method known in the art can be used for the method for producing the hard coating layer 21, and is not particularly limited. For example, one surface 11a of the substrate film 11 can be coated with a composition (coating liquid) including the curable resin by a conventionally known coating method such as doctor coating, dip coating, roll coating, bar coating, die coating, blade coating, air knife coating, kiss coating, spray coating, or spin coating, and the resultant can be, if necessary, dried, and thereafter subjected to a curing treatment, to thereby provide the hard coating layer 21 on the substrate film 11. The coating liquid here used can be obtained by compounding various solvents according to an ordinary method. Such a solvent here used can be one known in the art, for example, water; a ketone-based solvent such as methyl ethyl ketone, methyl isobutyl ketone, or cyclohexanone; an ester-based solvent such as methyl acetate, ethyl acetate, or butyl acetate; an ether-based solvent such as methyl cellosolve or ethyl cellosolve; an alcohol-based solvent such as methyl alcohol, ethyl alcohol, or isopropyl alcohol, or a mixed solvent thereof. The coating film obtained by such coating can be, if necessary, subjected to, for example, an ionizing radiation treatment, a heat treatment, and/or a pressure treatment to thereby cure the curable resin, thereby forming the hard coating layer 21.

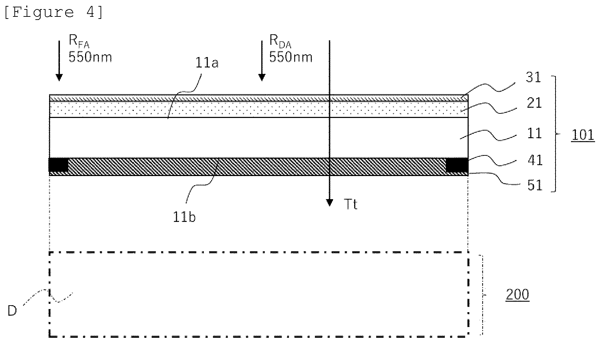

A composition at least containing one or more selected from the group consisting of the thermoplastic resin, the thermosetting resin, the ionizing radiation-curable resin, and the ionizing radiation-curable organic/inorganic hybrid hard coating agent, and the colorant can be subjected to shaping on the substrate film 11, to thereby obtain a laminated product as a shaped article where the hard coating layer 21 is provided on the substrate film 11. A known method can be applied to the shaping method, and is not particularly limited. For example, a known molding method such as press molding, drawing molding, pressure molding, vacuum molding, insert molding, or film insert molding can be applied to feed and cure the curable composition to and on the substrate film 11, thereby obtaining the laminated product as a shaped article. The antireflection layer 31, the print layer 41, and the like can also be similarly shaped, or the antireflection layer 31, the print layer 41, and the like can also be provided after a shaped article of the substrate film 11 and the hard coating layer 21 is obtained by shaping. As one example, the hard coating layer 21 can be formed on one surface 11a of the substrate film 11, the antireflection layer 31 can be, if necessary, further formed on the hard coating layer 21, thereafter the print layer 41 can be formed on other surface 11b of the substrate film 11, and the resulting laminated product (for example, a laminated product illustrated in Figure 3, having the antireflection layer 31, the hard coating layer 21, the substrate film 11, and the print layer 41 in the listed order) can be subjected to insert molding or the like to thereby obtain a shaped article having a predetermined shape (for example, an integrated smoke hard coating film shaped article 101 illustrated in Figure 4). A conventionally known shaping technique can be thus applied to thereby obtain, for example, a shaped article (integrated smoke hard coating film shaped article) where at least the hard coating layer 21 and the print layer 41 are shaped on the substrate film 11, or a shaped article (integrated smoke hard coating film shaped article) where at least the hard coating layer 21, the antireflection layer 31, and the print layer 41 are shaped on the substrate film 11. In a case where shaping such as film insert molding is performed, a resin for molding (resin layer 51 for molding) may be provided on other surface 11b of the substrate film 11, instead of the print layer 41, or on the print layer 41.

A light source for use in irradiation with ionizing radiation is not particularly limited. For example, a super high-pressure mercury lamp, a high-pressure mercury lamp, a medium-pressure mercury lamp, a low-pressure mercury lamp, a carbon-arc lamp, a metal halide lamp, a xenon lamp, or an electron beam accelerator can be used. The amount of irradiation here can also be appropriately set depending on the type, output performance, and the like of the light source used, and is not particularly limited, and the amount of irradiation with ultraviolet light is generally a cumulative amount of light of about 100 to 6,000 mJ/cm², as a target.

A heat source for use in the heat treatment is also not particularly limited. Any of a contact system or a non-contact system can be suitably used. For example, a far-infrared heater, a short wavelength infrared heater, a medium wavelength infrared heater, a carbon heater, an oven, or a heat roller can be used. The treatment temperature in the heat treatment is not particularly limited, and is generally 80 to 200°C, preferably 100 to 150°C.

The antireflection layer 31 is a layer having transparency in the visual light range and having the property of cancelling reflection light by means of an interference effect of light at a layer interface (hereinafter, referred to as "antireflection properties"). The antireflection layer 31 can be thus further provided to thereby prevent or reduce reflection of external light and/or an external image. The antireflection layer 31 having such antireflection properties, here adopted, can be not only a single-layered antireflection layer obtained by providing a low refractive index layer high in transparency at a thickness so that an optical thickness at a specific wavelength (main wavelength for the purpose of antireflection) is equal to one-fourth of the specific wavelength, but also a multi-layered antireflection layer obtained by appropriately laminating one or more of a high refractive index layer and a medium refractive index layer each having such an optical thickness based on the specific wavelength of the low refractive index layer. The optical thickness here mentioned is a thickness determined from the product nd of the refractive index n of a film and the mechanical thickness d.

Any material known in the art can be used as the material constituting the antireflection layer 31, and the type thereof is not particularly limited. For example, an oxide of Si, or any fluoride of Li, Na, Mg, Al, Ca and the like is known as the material constituting the low refractive index layer. Any simple substance of Ti, Cr, Zr, Ni, Mb and the like, or any oxide of Ti, Zn, Y, Zr, In, Sn, Sb, Hf, Ta, Ce, Pr, Nd and the like is known as the material constituting the high refractive index layer. Furthermore, any fluoride of La, Nd, Pb and the like is known as the material constituting the medium refractive index layer.

A method involving providing the material and the like constituting the low, high or medium refractive index layer according to a vacuum film formation method such as a vapor deposition method, a sputtering method, or an ion plating method is known as the method for forming the antireflection layer 31. The antireflection layer can also be formed by appropriately selecting, for example, a silicon oxide sol prepared by hydrolysis of silicon alkoxide such as tetraethoxysilane, tetramethoxysilane, methyl triethoxysilane, or methyl trimethoxysilane, or a metal oxide sol prepared by hydrolysis of metal alkoxide other than silicon alkoxide, such as zirconia propoxide, aluminum isopropoxide, titanium butoxide, or titanium isopropoxide, and subjecting it to a coating method such as a blade coater method, a rod coater method, or a gravure coater method. A method can also be adopted which is a liquid coating method for providing the antireflection layer by coating with an antireflection paint such as a fluorine-containing resin, a fluoropolymer, or an alkoxysilane-based resin using a hydrolyzed product of alkoxysilane.

The thickness of the antireflection layer 31 can be the thickness of the low/high/medium refractive index layers, if necessary, laminated, in which the optical thickness of the low/high/medium refractive index layers in the configuration is appropriately selected so as to be in the range from 0.01 to 0.8 µm, preferably 0.01 to 0.4 µm, in antireflection suitably performed in the visual light range. Herein, the central wavelength of light whose reflection is to be prevented is in the visual light range, therefore the refractive index n is about 1.40 in a case where λ is set to 550 nm being the central wavelength of wavelengths in a range commonly called the visual light range and silicon oxide is used in an inorganic thin film, and thus the thickness d of the antireflection layer is about 0.1 µm.

The print layer 41 provided on the surface 11b of the substrate film 11 is provided in order to, for example, impart a beautiful appearance image and identity, and is a decorative layer representing a line, a frame, a character, a symbol, a pattern, a picture, a trade name, an explanation, and/or the like. A black frame-shaped ink layer is provided around the print layer 41 of the present embodiment so as to surround the print layer in planar view, to thereby partition and form a frame area FA and a display area DA disposed in the frame area FA in planar view. The print layer 41 can be formed using, for example, an aqueous ink, an oil-based ink, or a sublimation ink according to a known printing method such as gravure printing, roll printing, spray printing, screen printing, or flexo printing. The print layer 41 may be formed by monochromatic printing or multicolor printing, and may be formed by screen printing or solid printing. The thickness of the print layer 41 can be appropriately adjusted according to an ordinary method, is not particularly limited, and is generally preferably 0.01 to 200 µm, more preferably 0.05 to 150 µm, further preferably 0.1 to 100 µm.

The smoke hard coating film 100 of the present embodiment, having a laminated structure including the substrate film 11 and the hard coating layer 21 at least arranged in the listed order, configured as above, is adjusted so that the total light transmittance (according to JIS K7361-1) of the display area DA in perpendicular incidence in the thickness direction, namely, at an incident angle of 0° is 0.5% or more and less than 75%. The smoke hard coating film 100 where the total light transmittance is thus adjusted can be mounted to a light-emitting display, to thereby allow the color tone and texture of the display area DA and those of, for example, the frame area FA therearound, in planar view, particularly in turn off of the display, to be approximated.

The total light transmittance of the display area DA of the smoke hard coating film 100 may be appropriately adjusted within the range of 0.5% or more and less than 75%, depending on the type of a light-emitting display as an adherend and the display brightness, and depending on desired performance. The total light transmittance of the smoke hard coating film 100 can be adjusted by modifying, for example, the type and the amount of the colorant used, and the type and the amount of the matting agent used. The total light transmittance of the smoke hard coating film 100 herein means a value measured with a haze mater (for example, NDH4000 (manufactured by Nippon Denshoku Industries Co., Ltd.)).

The display device 200, which serves as an adherend of the smoke hard coating film 100, includes a liquid crystal display as a light-emitting display and is configured so that the display area DA is disposed in the frame area FA in the case of providing of the smoke hard coating film 100, as illustrated in the plan view of Figure 1, in the present embodiment. The liquid crystal display is a liquid crystal display module including, for example, a backlight, a light guide plate, a diffuser plate, a liquid crystal layer, an oriented film, a transparent electrode, a color filter, and a polarizing plate (all are not illustrated). While an aspect where the smoke hard coating film 100 is provided on the display D with a pressure-sensitive adhesive layer A being interposed therebetween is shown in the present embodiment, the pressure-sensitive adhesive layer A is not an essential component, and the smoke hard coating film 100 can be provided directly on the display D. In a case where the pressure-sensitive adhesive layer A is provided, the pressure-sensitive adhesive layer A may be provided on the entire surfaces of a rear surface of the smoke hard coating film 100 and a front surface of the display D, or the pressure-sensitive adhesive layer A may be provided on only some portions of a rear surface of the smoke hard coating film 100 and a front surface of the display D.

In the image display device 300 of the present embodiment, the difference (|R_{DA} - R_{FA}|) between the reflectance of the display area DA (R_{DA}) at 550 nm in a SCI mode and the reflectance of the frame area FA around the display (R_{FA}) at 550 nm in the SCI mode in turn off of the display, is 5% or less in a state where the smoke hard coating film 100 is provided on a display surface. The image display device 300 of the present embodiment, in which the difference (|R_{DA} - R_{FA}|) in reflectance at 550 nm is thus 5% or less, realizes designability having feeling of unity (feeling of uniformity), in which the display area DA and the frame area FA therearound are approximate in color tone and texture, in particular, in turn off of the display in external view. In this regard, in a case where no smoke hard coating film 100 is placed, the reflectance of the display area DA of the light-emitting display (R_{DA}) at 550 nm in the SCI mode in turn off of the display, is generally about 7 to 20% or more and largely differs from the reflectance of the frame area FA (R_{FA}) at 550 nm in the SCI mode and therefore designability is impaired. The smoke hard coating film 100 of the present embodiment is, from such a viewpoint, especially effective in use for a light-emitting display which has a reflectance (R_{DA}) at 550 nm of at least more than 5% in the SCI mode in turn off of the display in a state where no smoke hard coating film 100 is placed. The difference (|R_{DA} - R_{FA}|) in reflectance at 550 nm is 5% or less to thereby allow high designability to be obtained, and the difference is preferably 4% or less, more preferably 3% or less from the viewpoint that higher designability is obtained. The reflectance (R_{DA}) at 550 nm and the reflectance (R_{FA}) at 550 nm herein each mean a value obtained by measurement with a spectrophotometric colorimeter (for example, CM-700d (manufactured by Konica Minolta, Inc.) in the SCI mode.

The reflectance of the display area DA (R_{DA}) at 550 nm in the SCI mode in turn off of the display is preferably within 6%, preferably 5% or less, more preferably 4% or less, from the viewpoint of higher designability, in a state where the smoke hard coating film 100 is provided on the display surface in the image display device 300 of the present embodiment. The reflectance of the frame area FA (R_{FA}) at 550 nm in the SCI mode in turn off of the display is here preferably within 5%, preferably 4% or less, more preferably 3% or less, in a state where the smoke hard coating film 100 is provided on the display surface.

The respective differences (|X_{DA} value - X_{FA} value|, |Y_{DA} value - Y_{FA} value|, and |Z_{DA} value - Z_{FA} value|) between the reflectance X_{DA} value, the reflectance Y_{DA} value, and the reflectance Z_{DA} value of the display area DA in the XYZ color system in the SCI mode and the reflectance X_{FA} value, the reflectance Y_{FA} value, and the reflectance Z_{FA} value of the frame area FA around the display in the XYZ color system in the SCI mode in turn off of the display are each preferably within 5% in a state where the smoke hard coating film is provided on the display surface, from the viewpoint of an enhancement in high-class feeling due to cooperation with an interior material and/or an exterior material of a black color such as piano black tone or black metal tone. Such a smoke tone is made to thereby enhance in particular designability in higher-end in-vehicle use, theater room use, and/or the like where black-based interior material and exterior material having a piano black tone, black metal tone or the like are frequently used. The respective differences in reflectance (|X_{DA} value - X_{FA} value|, |Y_{DA} value - Y_{FA} value|, |Z_{DA} value - Z_{FA}| value are each more preferably 4% or less, further preferably 3% or less. The reflectance in the XYZ color system herein means a value obtained by measurement in the SCI mode with a spectrophotometric colorimeter (for example, CM-700d (manufactured by Konica Minolta, Inc.), by use of CIE standard illuminant D₆₅, according to JIS Z 8720: 2012.

The reflectance X_{DA} value, the reflectance Y_{DA} value, and the reflectance Z_{DA} value of the display area DA (by use of a CIE standard illuminant D₆₅, according to JIS Z 8720: 2012) in the XYZ color system in the SCI mode are each preferably within 6%, more preferably 5% or less, further preferably 4% or less in a state where the smoke hard coating film 100 is provided on the display surface in the image display device 300 of the present embodiment, from the viewpoint that higher designability is obtained. The reflectance X_{FA} value, the reflectance Y_{FA} value, and the reflectance Z_{FA} value of the frame area FA at 550 nm in the SCI mode in turn off of the display are each preferably within 5%, preferably 4% or less, more preferably 3% or less in a state where the smoke hard coating film 100 is provided on the display surface.

While the present embodiment represents an example where a liquid crystal display (LCD) is used as the display device 200, the smoke hard coating film 100 can also be again applied to a display device including a light-emitting display such as a cathode-ray tube (CRT), a plasma display (PDP), or a electroluminescence display (OELD or IELD), and exerts the same effects.

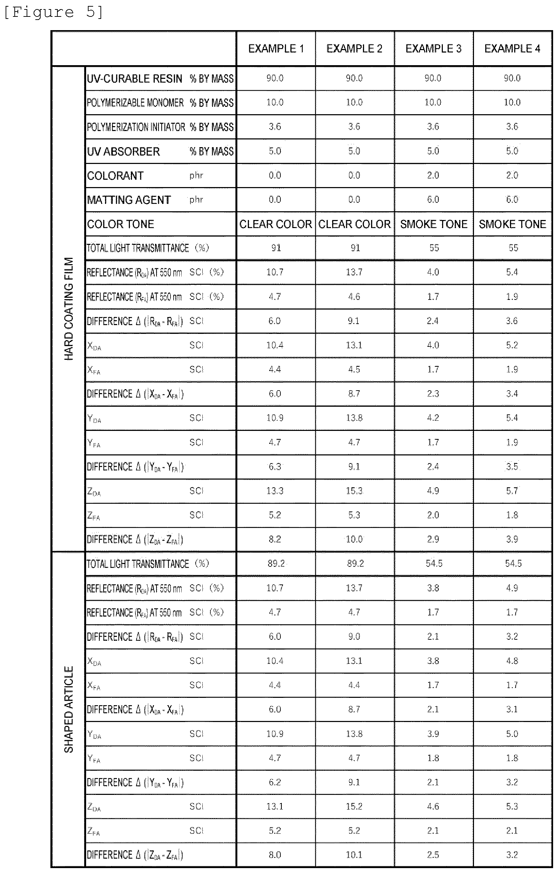

Figure 5 illustrates each example of data actually measured with respect to the total light transmittance of the display area DA, the respective reflectances at 550 nm of the display area DA and the frame area FA, and the respective reflectances of the display area DA and the frame area FA in the XYZ color system in a smoke hard coating film 100 having the same structure as in Figure 3, an integrated smoke hard coating film shaped article 101 which is obtained by film insert molding with the smoke hard coating film and which has the same structure as in Figure 4, and an image display device 300 using the integrated smoke hard coating film shaped article 101. The colorant and the matting agent, here used, are respectively carbon black having an average particle size D₅₀ of 250 nm and silica having an average particle size D₅₀ of 5 µm. In the Figure, "phr" represents "parts by mass" in terms of solid content based on 100 parts by mass of the entire resin component included in the hard coating layer 22.

### [Industrial Applicability]

The present invention provides a new design concept that can allow an image display device including a light-emitting display to be enhanced in feeling of uniformity of designability between a display area of the display and, for example, a frame area therearound, and can be widely and effectively utilized for a hard coating film of a light-emitting display such as a cathode-ray tube (CRT), a plasma display (PDP), a liquid crystal display (LCD), or an electroluminescence display (OELD or IELD) and in particular can be especially effectively utilized in higher-end in-vehicle use, theater room use, and/or the like where black-based interior material and exterior material having a piano black tone, black metal tone or the like are frequently used.

### [Reference Signs List]

- 11: substrate film
- 11a: surface
- 11b: surface
- 21: hard coating layer
- 31: antireflection layer
- 41: print layer
- 51: resin layer for molding
- 100: smoke hard coating film
- 101: integrated smoke hard coating film shaped article
- 200: display device
- 300: image display device
- A: pressure-sensitive adhesive layer
- D: display
- DA: display area
- F: frame
- FA: frame area

## Claims

1. A display device provided with a smoke hard coating film, comprising at least: a display device comprising a light-emitting display; and a smoke hard coating film provided on a display of the display device, wherein
the smoke hard coating film comprises at least: a hard coating layer comprising at least a curing resin and a colorant dispersed in the curing resin; and a print layer for partition and formation of a frame area and a display area placed in the frame area in planar view, and the smoke hard coating film in the display area has a total light transmittance (according to JIS K7361-1) of 0.5% or more and less than 75%, and
a difference (|R_{DA} - R_{FA}|) between a reflectance of the display area (R_{DA}) at 550 nm in a SCI mode and a reflectance of the frame area around the display (R_{FA}) at 550 nm in the SCI mode in turn off of the display is 5% or less in a state where the smoke hard coating film is provided on the display surface.

2. The display device provided with a smoke hard coating film according to claim 1, wherein
the reflectance of the display area (R_{DA}) at 550 nm in the SCI mode in turn off of the display is within 6% in a state where the smoke hard coating film is provided on the display surface.

3. A smoke hard coating film to be provided on a display of a display device comprising a light-emitting display, the smoke hard coating film comprising at least:
a hard coating layer comprising at least a curing resin and a colorant dispersed in the curing resin; and a print layer for partition and formation of a frame area and a display area placed in the frame area in planar view, wherein
the smoke hard coating film in the display area has a total light transmittance (according to JIS K7361-1) of 0.5% or more and less than 75%, and
a difference (|R_{DA} - R_{FA}|) between a reflectance of the display area (R_{DA}) at 550 nm in a SCI mode and a reflectance of the frame area around the display (R_{FA}) at 550 nm in the SCI mode in turn off of the display is 5% or less in a state where the smoke hard coating film is provided on the display surface.

4. The smoke hard coating film according to claim 3, wherein
the reflectance of the display area (R_{DA}) at 550 nm in turn off of the display is within 6% in a state where the smoke hard coating film is provided on the display surface.

5. The smoke hard coating film according to claim 3 or 4, wherein
respective differences (|X_{DA} value - X_{FA} value|, |Y_{DA} value - Y_{FA} value|, and |Z_{DA} value - Z_{FA} value|) between a reflectance X_{DA} value, a reflectance Y_{DA} value, and a reflectance Z_{DA} value of the display area (by use of a CIE standard illuminant D₆₅, according to JIS Z 8720: 2012) in an XYZ color system in a SCI mode and a reflectance X_{FA} value, a reflectance Y_{FA} value, and a reflectance Z_{FA} value of the frame area around the display in the XYZ color system in the SCI mode in turn off of the display are each within 5 in a state where the smoke hard coating film is provided on the display surface.

6. The smoke hard coating film according to any one of claims 3 to 5, wherein
a reflectance X_{DA} value, a reflectance Y_{DA} value, and a reflectance Z_{DA} value of the display area (by use of a CIE standard illuminant D₆₅, according to JIS Z 8720: 2012) in an XYZ color system in the SCI mode in turn off of the display are each 6 or less in a state where the smoke hard coating film is provided on the display surface.

7. The smoke hard coating film according to any one of claims 3 to 6, wherein
the colorant comprises carbon black having an average particle size D₅₀ of 0.01 to 2.0 µm.

8. The smoke hard coating film according to any one of claims 3 to 7, wherein
a content rate of the colorant is 1 to 15 parts by mass in terms of solid content based on 100 parts by mass of the entire resin component.

9. The smoke hard coating film according to any one of claims 3 to 8, wherein
the hard coating layer further comprises a matting agent.

10. The smoke hard coating film according to claim 9, wherein
a content rate of the matting agent is 1 to 15 parts by mass in terms of solid content based on 100 parts by mass of the entire resin component.

11. The smoke hard coating film according to any one of claims 3 to 10, wherein
the smoke hard coating film is a shaped article obtained by shaping at least the hard coating layer and the print layer on a substrate film.

12. The smoke hard coating film according to any one of claims 3 to 11, wherein
the smoke hard coating film is a laminated molded product comprising a laminated structure including at least the hard coating layer, a substrate film, and the print layer in the listed order.

13. The smoke hard coating film according to any one of claims 3 to 11, wherein
the smoke hard coating film is a laminated molded product comprising a laminated structure including at least an antireflection layer, the hard coating layer, a substrate film, and the print layer in the listed order.

14. An integrated smoke hard coating film shaped article which comprises a laminated structure including at least a hard coating layer, a substrate film, a print layer and a resin layer for molding in the listed order and which is to be provided on a display of a display device comprising a light-emitting display, wherein
the hard coating layer comprises at least a curing resin and a colorant dispersed in the curing resin,
the print layer partitions and forms a frame area and a display area placed in the frame area in planar view,
the integrated smoke hard coating film shaped article in the display area has a total light transmittance (according to JIS K7361-1) of 0.5% or more and less than 75%, and
a difference (|R_{DA} - R_{FA}|) between a reflectance of the display area (R_{DA}) at 550 nm in a SCI mode and a reflectance of the frame area around the display (R_{FA}) at 550 nm in the SCI mode in turn off of the display is 5% or less in a state where the integrated smoke hard coating film shaped article is provided on the display surface.
